# EUROPÄISCHE PATENTANMELDUNG

(11) **EP 4 512 659 A1**
(43) Veröffentlichungstag der Anmeldung: **26.02.2025**
(21) Anmeldenummer: 24195274.6
(22) Anmeldetag: 20.08.2024
(51) Int. Cl.: B60P 3/34, B60P 3/39

(54) **FREIZEITFAHRZEUG UND ABLAGEEINRICHTUNG FÜR EINEN INNENRAUM**

(30) Priorität: 25.08.2023 DE 102023122923
(71) Anmelder: Bürstner GmbH & CO. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Ablageeinrichtung (2) für einen Innenraum (21) von Freizeitfahrzeugen (1), insbesondere von Wohnmobilen und/oder Campervans und/oder auf einem Hochdachkombi (4) basierenden Freizeitfahrzeugen (1), mit einer zumindest näherungsweise horizontal ausgerichteten Ablagefläche (20). Vorgeschlagen wird, dass eine erste Stabanordnung (21), die mehrere Stäbe (22) aufweist, und eine zweite Stabanordnung (23), die mehrere Stäbe (24) aufweist, vorgesehen sind, dass die Stäbe (22) der erste Stabanordnung (21) und die Stäbe (24) der zweiten Stabanordnung (23) in einem eingeschobenen Zustand (25) zur zumindest teilweisen Bildung der Ablagefläche (20) zumindest im Wesentlichen ineinandergeschoben sind und dass zur Vergrößerung der Ablagefläche (20) in einem ausgezogenen Zustand (26) die Stäbe (24) der zweiten Stabanordnung (23) zumindest teilweise aus den Stäben (22) der ersten Stabanordnung (21) herausgezogen sind. Ferner ist ein Freizeitfahrzeug (1) mit solch einer Ablageeinrichtung (2) angegeben.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

In einem Freizeitfahrzeug, wie beispielsweise einem Wohnmobil, sind in der Regel mehrere näherungsweise horizontal ausgerichteten Ablagefläche vorgesehen.

Wenn der Innenraum des Freizeitfahrzeugs besonders begrenzt ist, dann sind Einrichtungen mit Ablageflächen nicht oder nur in geringem Umfang realisierbar, wenn zugleich Stauraum für sperrige Güter benötigt wird.

Aufgabe der Erfindung ist es, eine Ablageeinrichtung für ein Freizeitfahrzeug und ein Freizeitfahrzeug anzugeben, die verbessert ausgestaltet sind. Insbesondere ist es eine Aufgabe der Erfindung eine Ablageeinrichtung für ein Freizeitfahrzeug und ein Freizeitfahrzeug anzugeben, bei denen bei einem besonders begrenzten Innenraum des Freizeitfahrzeugs eine relativ große Ablagefläche realisierbar ist und zugleich ein Stauraum für den Transport sperriger Güter ermöglicht wird.

Die Aufgabe wird durch eine Ablageeinrichtung mit den Merkmalen des unabhängigen Patentanspruchs 1 und durch ein Freizeitfahrzeug mit den Merkmalen des Patentanspruchs 10 gelöst. Vorteilhafte Weiterbildung der Erfindung sind in den Unteransprüchen angegeben.

Die Aufgabe wird durch eine Ablageeinrichtung für einen Innenraum von Freizeitfahrzeugen, insbesondere von Wohnmobilen und/oder Campervans und/oder auf einem Hochdachkombi basierenden Freizeitfahrzeugen, mit einer zumindest näherungsweise horizontal ausgerichteten Ablagefläche, gelöst, wobei eine erste Stabanordnung, die mehrere Stäbe aufweist, und eine zweite Stabanordnung, die mehrere Stäbe aufweist, vorgesehen sind, wobei die Stäbe der erste Stabanordnung und die Stäbe der zweiten Stabanordnung in einem eingeschobenen Zustand zur zumindest teilweisen Bildung der Ablagefläche zumindest im Wesentlichen ineinandergeschoben sind und wobei zur Vergrößerung der Ablagefläche in einem ausgezogenen Zustand die Stäbe der zweiten Stabanordnung zumindest teilweise aus den Stäben der ersten Stabanordnung herausgezogen sind.

Ferner wird die Aufgabe durch ein Freizeitfahrzeug, insbesondere ein Wohnmobil und/oder einen Campervan und/oder ein auf einem Hochdachkombi basierendes Freizeitfahrzeug, mit zumindest einer solchen Ablageeinrichtung gelöst.

Vorteilhaft ist es, dass dass die Stäbe der erste Stabanordnung und die Stäbe der zweiten Stabanordnung in dem eingeschobenen Zustand die Ablagefläche als eine als zumindest im Wesentlichen spaltfreie Ablagefläche ausbilden. Dadurch kann die Ablagefläche im eingeschobenen Zustand vorteilhaft genutzt werde. Insbesondere wird ein Ablegen kleiner Sachen ermöglicht, ohne dass diese durch Spalte der Ablagefläche fallen können.

Vorteilhaft ist es, dass die Stäbe der ersten Stabanordnung und die Stäbe der zweiten Stabanordnung im eingeschobenen Zustand wechselweise nebeneinander angeordnet sind. Dadurch wird eine vorteilhafte Führung ermöglicht. Ferner kann eine hohe Stabilität gewährleistet werde.

Vorteilhaft ist es, dass die Stäbe der zweiten Stabanordnung zumindest näherungsweise parallel zu der Ablagefläche aus den Stäben der ersten Stabanordnung herausziehbar sind. Dadurch kann eine horizontale Ablagefläche gewährleistet werden.

Vorteilhaft ist es, dass zumindest ein Auflageelement, das vorzugsweise als Auflagebrett ausgestaltet ist, vorgesehen ist, dass das Auflageelement eine in der Ausziehrichtung, in der die Stäbe der zweiten Stabanordnung aus den Stäben der ersten Stabanordnung ziehbar sind, eine Breite aufweist, die zumindest näherungsweise einer in der Ausziehrichtung betrachteten Breite der Ablagefläche im eingeschobenen Zustand ist, und dass das Auflageelement so vergrößerbar, insbesondere aufklappbar, ausgestaltet ist, dass das Auflageelement in einem vergrößerten, insbesondere aufgeklappten, Zustand eine in der Ausziehrichtung betrachtete vergrößerte Breite aufweist, die zumindest näherungsweise gleich einer in der Ausziehrichtung betrachteten Breite der Ablagefläche im ausgezogenen Zustand ist. Das Auflagebrett kann eine weitere Funktionalität gewährleisten. Dadurch kann auch bei sehr begrenztem Innenraum eine zusätzliche Nutzung des Freizeitfahrzeugs, insbesondere in Bezug auf ein Bett, gewährleistet werden.

Vorteilhaft ist es, dass das Auflageelement vertikal betrachtet unter der Ablagefläche und horizontal betrachtet zumindest teilweise neben der Ablagefläche angeordnet ist und/oder dass das Auflageelement im vergrößerten Zustand eine Auflagefläche ausbildet, an der eine Campingbettauflage, insbesondere ein Ende der Campingbettauflage, abstützbar ist. Dadurch kann die Auflagefläche über die Campingbettauflage erweitert werden.

Vorteilhaft ist es, dass eine vorzugsweise geschlossene Platte vorgesehen ist, dass die Stäbe der ersten Stabanordnung mit der Platte verbunden sind und dass die Ablagefläche teilweise an der Platte ausgebildet ist. Über die Größe der Platte ist eine Anpassung an unterschiedliche Innenraumbreiten des Freizeitfahrzeugs möglich.

Vorteilhaft ist es, dass zur vertikalen Abstützung zumindest ein Stützelement, insbesondere eine Stützplatte, vorgesehen ist, an dem die Platte an ihrer Stirnseite zumindest mittelbar befestigt ist. Hierbei kann die vertikale Abstützung so realisiert werden, dass eine Beladung insbesondere vom Heck her möglich ist.

Vorteilhaft ist es, dass zur vertikalen Abstützung zumindest ein Stützelement, insbesondere eine Stützplatte, vorgesehen ist, an dem die Stäbe der ersten Stabanordnung zumindest mittelbar befestigt sind. Hierbei kann die vertikale Abstützung so realisiert werden, dass eine Beladung insbesondere vom Heck her möglich ist.

Vorteilhaft ist es, dass die Ablageeinrichtung in einem Heckraum angeordnet ist. Dadurch kann die Funktionalität des Freizeitfahrzeugs verbessert werden. Insbesondere können eine vorteilhafte Beladung, auch mit sperrigen Gütern, und eine Realisierung eines Campingbettes sowie ein Verstauen von anderen, kleineren Gütern ermöglicht werden.

Vorteilhaft ist es, dass eine zumindest teilweise umklappbare Rückbank vorgesehen ist, dass im eingeschobenen Zustand neben der Ablageeinrichtung ein Stauraum, insbesondere für zumindest ein Fahrrad, frei bleibt, und dass sich die Ablagefläche im ausgezogenen Zustand zumindest im Wesentlichen über einen Breite des Innenraums erstreckt. Hierdurch kann im Bedarfsfall eine Nutzung zum Transport von sperrigen Gütern auch bei einem sehr begrenzten Innenraum ermöglicht werden.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einer Ablageeinrichtung entsprechend einem Ausführungsbeispiel in einer schematischen, räumlichen Darstellung, wobei eine Ansicht von hinten bei geöffneter Heckklappe dargestellt ist;
- Fig. 2: eine auszugsweise, geöffnete, teilweise geschnittene Darstellung des in Fig. 1 gezeigten Freizeitfahrzeugs aus der mit II bezeichneten Blickrichtung;
- Fig. 3: das in Fig. 1 gezeigte Freizeitfahrzeug, wobei im Heck ein Stauraum für ein Fahrrad geschaffen ist;
- Fig. 4: das in Fig. 3 gezeigte Freizeitfahrzeug, wobei der Stauraum geleert ist, so dass eine Vergrößerung einer Ablagefläche ermöglicht ist;
- Fig. 5: das in Fig. 4 gezeigte Freizeitfahrzeug, wobei die Ablagefläche vergrößert ist;
- Fig. 6: das in Fig 5 gezeigte Freizeitfahrzeug in einer auszugsweisen, geöffneten, teilweise geschnittenen Darstellung aus der mit VI bezeichneten Blickrichtung;
- Fig. 7: das in Fig. 5 gezeigte Freizeitfahrzeug, wobei eine als Luftmatratze ausgebildete Matratze eines Campingbettes für beispielsweise zwei Personen, die längs schlafen können, gezeigt ist; und
- Fig. 8: das in Fig. 7 gezeigte Freizeitfahrzeug aus der mit VIII gezeigten Blickrichtung, wobei die Matratze nicht dargestellt ist.

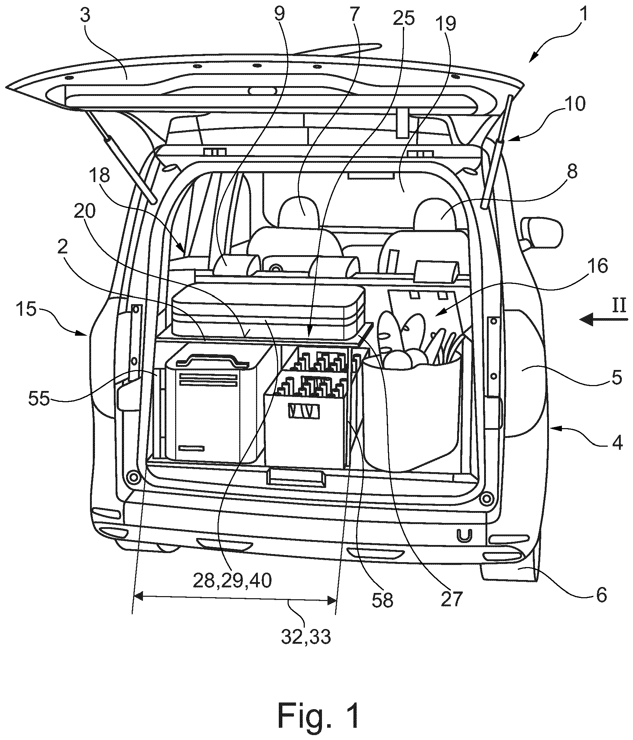

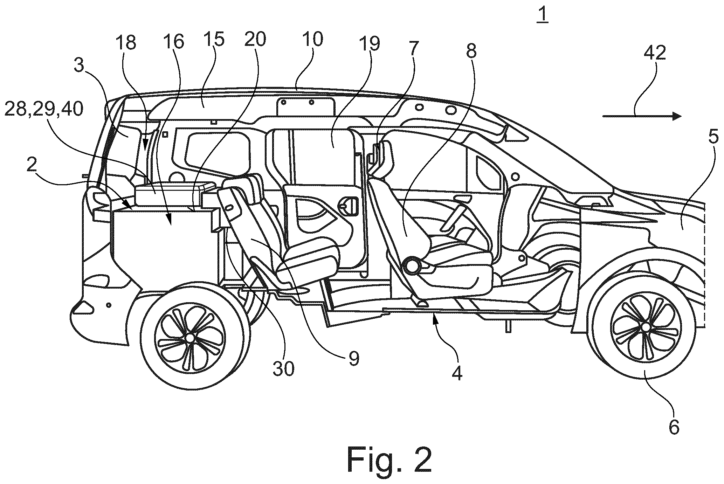

Fig. 1 zeigt ein Freizeitfahrzeug 1 mit einer Ablageeinrichtung 2 entsprechend einem Ausführungsbeispiel in einer schematischen, räumlichen Darstellung, wobei eine Ansicht von hinten bei geöffneter Heckklappe 3 dargestellt ist. Fig. 2 zeigt eine auszugsweise, geöffnete, teilweise geschnittene Darstellung des in Fig. 1 gezeigten Freizeitfahrzeugs 1 aus der mit II bezeichneten Blickrichtung.

Das Freizeitfahrzeug 1 kann auf einem Basisfahrzeug 4 basieren. Als Basisfahrzeug 4 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 5, das Fahrwerk 6, die Sitze 7, 8 der ersten Reihe und die Rückbank 9 übernommen. Die Heckklappe 3 ist vorzugsweise die Heckklappe 3 des Basisfahrzeugs 4.

Es sind aber geeignete Modifikationen möglich. Beispielsweise kann an dem Dach 10 ein geeigneter Dachausschnitt (nicht dargestellt) vorgesehen sein, um beispielsweise den Aufstieg in ein Dachzelt zu ermöglichen.

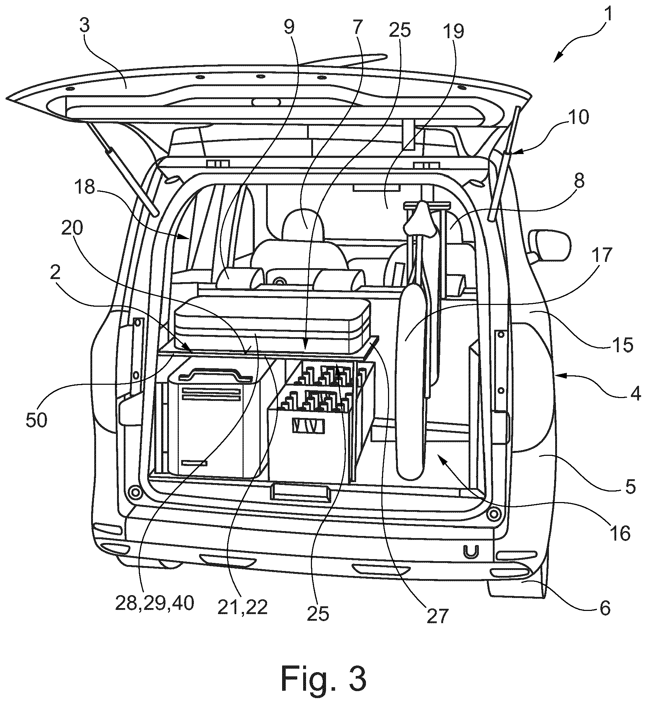

Im folgenden sind das Freizeitfahrzeug 1 und die Ablageeinrichtung 2 auch unter Bezugnahme auf Fig. 3 bis 5 weiter beschrieben.

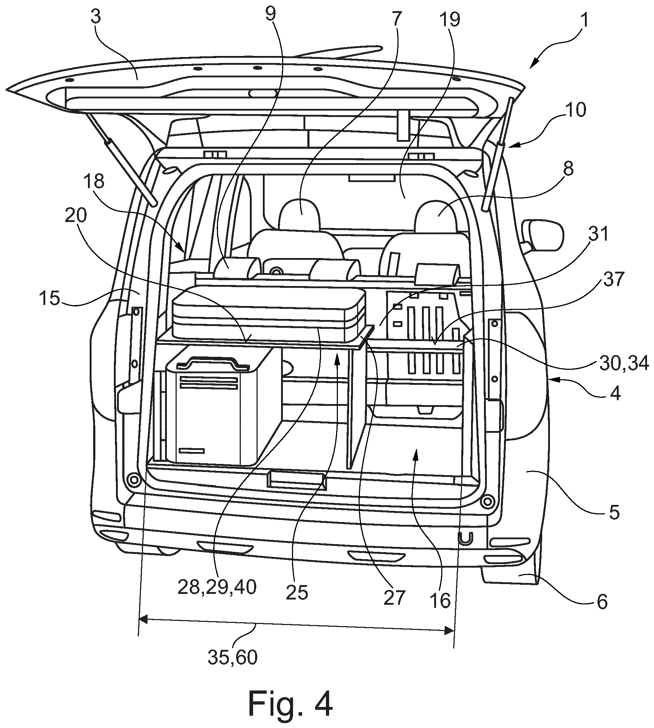

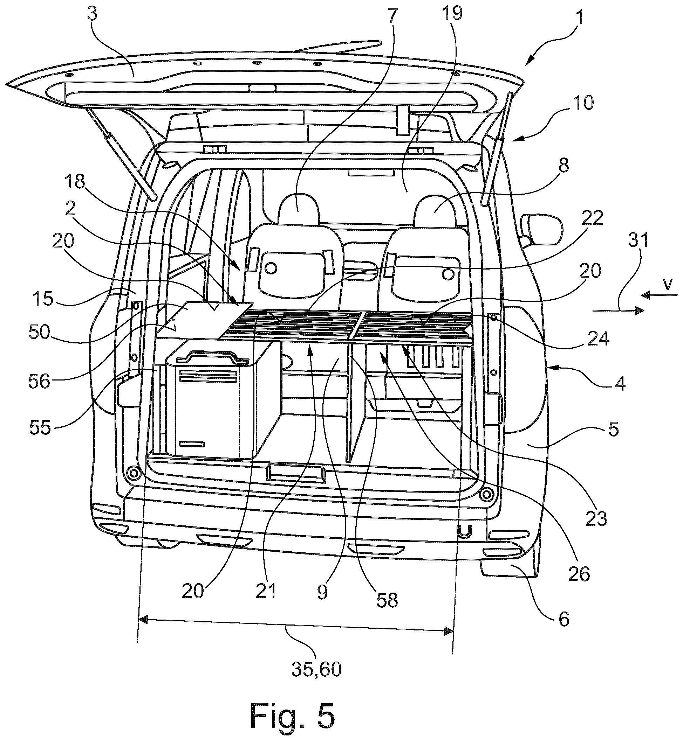

Fig. 3 zeigt das in Fig. 1 gezeigte Freizeitfahrzeug 1, wobei im Heck 15 ein Stauraum 16 für ein Fahrrad 17 geschaffen ist. Fig. 4 zeigt das in Fig. 3 gezeigte Freizeitfahrzeug 1, wobei der Stauraum 16 geleert ist, so dass eine Vergrößerung einer Ablagefläche 20 der Ablageeinrichtung 2 ermöglicht ist. Hierbei ist in diesem Ausführungsbeispiel der Stauraum 16 beziehungsweise das Fahrrad 17 teilweise in einem Heckraum 18 im Heck 15 des Basisfahrzeugs 4 realisiert beziehungsweise anordenbar. Fig. 5 zeigt das in Fig. 4 gezeigte Freizeitfahrzeug 1, wobei die Ablagefläche 20 vergrößert ist.

Das Freizeitfahrzeug 1 weist eine Ablageeinrichtung 2 auf. Die Ablageeinrichtung 2 kann aber auch unabhängig von einem Freizeitfahrzeug 1 hergestellt und vertrieben werden.

Die Ablageeinrichtung 2 dient für einen Innenraum 19 des Freizeitfahrzeugs 1. In diesem Ausführungsbeispiel ist das Basisfahrzeug 4 ein Hochdachkombi 4, der nur einen begrenzten Innenraum 19 aufweist. Die Ablageeinrichtung ist im Heckraum 18 angeordnet. Außerdem ist genau eine Ablageeinrichtung 2 vorgesehen, was bei dem begrenzten Innenraum 19 bevorzugt ist. Allerdings eignet sich die Ablageeinrichtung 2 auch für größere Wohnmobile und/oder Campervans, wobei gegebenenfalls auch zwei oder mehr Ablageeinrichtungen 2 vorgesehen sein können.

Die Ablageeinrichtung 2 weist eine horizontal ausgerichteten Ablagefläche 20 auf. Ferner umfasst die Ablageeinrichtung 2 eine erste Stabanordnung 21, die mehrere Stäbe 22 aufweist, und eine zweite Stabanordnung 23, die mehrere Stäbe 24 aufweist. Die Stäbe 22 der erste Stabanordnung 21 und die Stäbe 24 der zweiten Stabanordnung 23 bilden in einem eingeschobenen Zustand 25, in dem die Stäbe 22, 24 entgegengesetzt zueinander ineinander geschoben sind, teilweise die Ablagefläche 20. Zur Vereinfachung der Darstellung ist in Fig. 5 nur jeweils ein Stab 22, 24 gekennzeichnet.

Die Stäbe 22 der erste Stabanordnung 21 und die Stäbe 24 der zweiten Stabanordnung 23 bilden in diesem Ausführungsbeispiel im eingeschobenen Zustand eine spaltfreie Ablagefläche 20 aus. Die Stäbe 22 der ersten Stabanordnung 21 und die Stäbe 24 der zweiten Stabanordnung 23 sind hierbei im eingeschobenen Zustand wechselweise nebeneinander angeordnet.

Die Stäbe 24 der zweiten Stabanordnung 23 können von einem Nutzer parallel zu der Ablagefläche 20 aus den Stäben 22 der ersten Stabanordnung 21 herausgezogen werden. In einem ausgezogenen Zustand 26 ist die Ablagefläche 20 dann vergrößert. Die Stäbe 24 der zweiten Stabanordnung 23 sind dann im Wesentlichen aus den Stäben 22 der ersten Stabanordnung 21 herausgezogen. Der Nutzer kann die zweite Stabanordnung 23 beispielsweise an einem Griff 27 herausziehen und wieder hineinschieben.

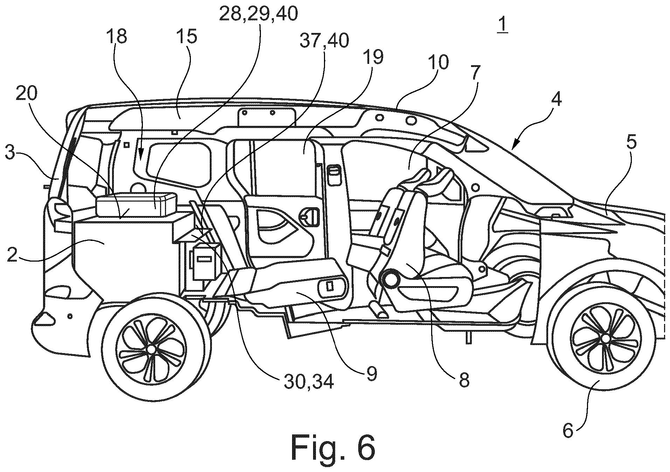

Im folgenden wird die Ausgestaltung des Ausführungsbeispiels auch unter Bezugnahme auf die Fig. 6 bis 8 weiter beschrieben.

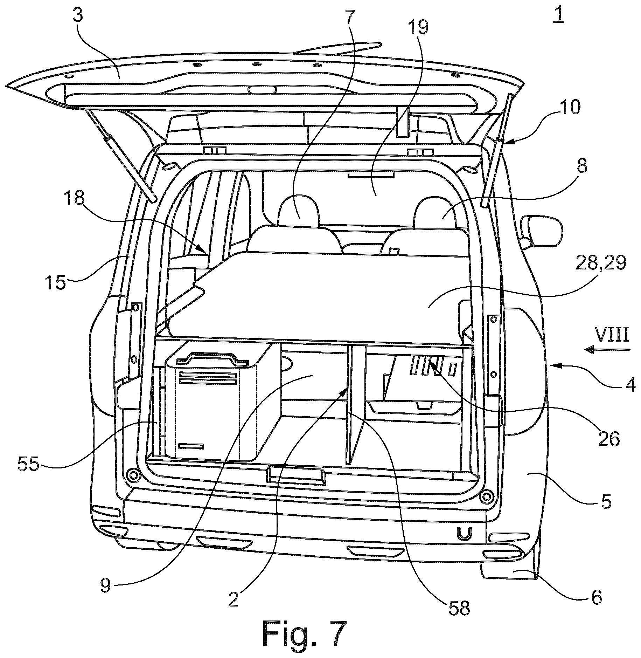

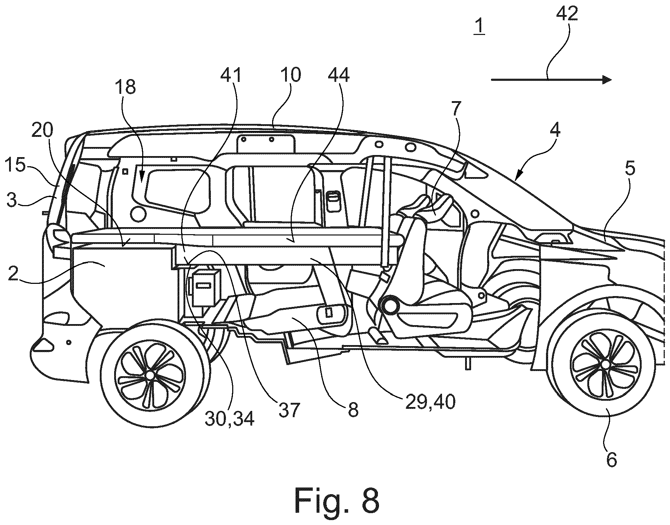

Fig. 6 zeigt das in Fig 5 gezeigte Freizeitfahrzeug 1 in einer auszugsweisen, geöffneten, teilweise geschnittenen Darstellung aus der mit VI bezeichneten Blickrichtung. Fig. 7 zeigt das in Fig. 5 gezeigte Freizeitfahrzeug 1, wobei eine als Luftmatratze 28 ausgebildete Matratze 28 eines Campingbettes 29 für beispielsweise zwei Personen, die längs schlafen können, gezeigt ist. Fig. 8 zeigt das in Fig. 7 gezeigte Freizeitfahrzeug 1 aus der mit VIII gezeigten Blickrichtung, wobei die Matratze 28 nicht dargestellt ist.

Die Ablageeinrichtung weist ein Auflageelement 30 auf, das als klappbares Auflagebrett 30 ausgestaltet ist. Das Auflageelement 30 weist im zusammengeklappten (eingeklappten) Zustand in der Ausziehrichtung 31 betrachtet, in der die Stäbe 24 der zweiten Stabanordnung 23 aus den Stäben 22 der ersten Stabanordnung 21 ziehbar sind, eine Breite 32 auf. Die Breite 32 ist gleich der ebenfalls in der Ausziehrichtung 31 betrachteten Breite 33 der Ablagefläche 20 im eingeschobenen Zustand 25 der Ablagefläche 20.

D Auflageelement 30 ist durch Aufklappen vergrößerbar. Im aufgeklappten, Zustand 34 weist das Auflageelement 30 eine in der Ausziehrichtung 31 betrachtete vergrößerte Breite 35 auf, die gleich einer in der Ausziehrichtung 31 betrachteten Breite 33 der Ablagefläche 20 im ausgezogenen Zustand 26 ist.

Das Auflageelement 30 ist vertikal betrachtet unter der Ablagefläche 20 angeordnet. Ferner ist das Auflageelement 30 horizontal betrachtet neben der Ablagefläche 20 angeordnet. Das Auflageelement 30 bildet im vergrößerten Zustand 34 eine Auflagefläche 37 aus, an der eine Campingbettauflage 40 für das Campingbrett 29 abgestützt ist. Hierbei wird ein ein Ende 41 der Campingbettauflage 40 so auf die Auflagefläche 27 aufgelegt, dass die Campingbettauflage 40 die Ablagefläche 20 in Längsrichtung 42 des Fahrzeugs 1 verlängert. Vorzugsweise wird die Ablagefläche 20 hierbei stufenlos durch die Oberseite 44 der Campingbettauflage 40 verlängert. Die Luftmatratze 28 kann dann auf die Ablagefläche 20 und die Oberseite 44 der Campingbettauflage 40 gelegt werden.

Außerdem ist eine vorzugsweise geschlossene Platte 50 vorgesehen. Die Stäbe 22 der ersten Stabanordnung 21 sind mit der Platte 50 verbunden. Die Ablagefläche 20 ist in diesem Ausführungsbeispiel auch teilweise an der Platte 50 ausgebildet. Zur vertikalen Abstützung ist ferner ein Stützelement 55, das als Stützplatte 55 ausgebildet ist, vorgesehen. An der Stützplatte 55 ist die Platte 50 an ihrer Stirnseite 56 befestigt. Außerdem ist zur vertikalen Abstützung ein Stützelement 58, das als Stützplatte 58 ausgebildet ist, vorgesehen. An der Stützplatte 58 sind die Stäbe 22 der ersten Stabanordnung 21 befestigt.

Das Freizeitfahrzeug 1 weist eine in mehreren Teilen (Segmenten) umklappbare Rückbank 9 auf. Im eingeschobenen Zustand ist dadurch neben der Ablageeinrichtung 2 ein Stauraum 16 realisierbar der für zumindest ein Fahrrad 17 oder andere sperrige Güter ausreicht. Andererseits erstreckt sich die Ablagefläche 20 im ausgezogenen Zustand zumindest im Wesentlichen über einen Breite 60 des Innenraums 19 im Heck 15, also des Heckraums 18.

Die Erfindung ist nicht auf die beschriebenen Ausführungsformen beschränkt.

## Patentansprüche

1. Ablageeinrichtung (2) für einen Innenraum (21) von Freizeitfahrzeugen (1), insbesondere von Wohnmobilen und/oder Campervans und/oder auf einem Hochdachkombi (4) basierenden Freizeitfahrzeugen (1), mit einer zumindest näherungsweise horizontal ausgerichteten Ablagefläche (20),
**dadurch gekennzeichnet,**
**dass** eine erste Stabanordnung (21), die mehrere Stäbe (22) aufweist, und eine zweite Stabanordnung (23), die mehrere Stäbe (24) aufweist, vorgesehen sind, dass die Stäbe (22) der erste Stabanordnung (21) und die Stäbe (24) der zweiten Stabanordnung (23) in einem eingeschobenen Zustand (25) zur zumindest teilweisen Bildung der Ablagefläche (20) zumindest im Wesentlichen ineinandergeschoben sind und dass zur Vergrößerung der Ablagefläche (20) in einem ausgezogenen Zustand (26) die Stäbe (24) der zweiten Stabanordnung (23) zumindest teilweise aus den Stäben (22) der ersten Stabanordnung (21) herausgezogen sind.

2. Ablageeinrichtung nach Anspruch 1,
**dadurch gekennzeichnet,**
**dass** dass die Stäbe (22) der erste Stabanordnung (21) und die Stäbe (24) der zweiten Stabanordnung (23) in dem eingeschobenen Zustand die Ablagefläche (20) als eine als zumindest im Wesentlichen spaltfreie Ablagefläche (20) ausbilden.

3. Ablageeinrichtung nach einem der vorhergehenden Ansprüche,
**dadurch gekennzeichnet,**
**dass** die Stäbe (22) der ersten Stabanordnung (21) und die Stäbe (24) der zweiten Stabanordnung (23) im eingeschobenen Zustand wechselweise nebeneinander angeordnet sind.

4. Ablageeinrichtung nach einem der vorhergehenden Ansprüche,
**dadurch gekennzeichnet,**
**dass** die Stäbe (24) der zweiten Stabanordnung (23) zumindest näherungsweise parallel zu der Ablagefläche (20) aus den Stäben (22) der ersten Stabanordnung (21) herausziehbar sind.

5. Ablageeinrichtung nach einem der vorherigen Ansprüche,
**dadurch gekennzeichnet,**
**dass** zumindest ein Auflageelement (30), das vorzugsweise als Auflagebrett (30) ausgestaltet ist, vorgesehen ist, dass das Auflageelement (30) eine in der Ausziehrichtung (31), in der die Stäbe (24) der zweiten Stabanordnung (23) aus den Stäben (22) der ersten Stabanordnung (21) ziehbar sind, eine Breite (32) aufweist, die zumindest näherungsweise einer in der Ausziehrichtung (31) betrachteten Breite (33) der Ablagefläche (20) im eingeschobenen Zustand (25) ist, und dass das Auflageelement (30) so vergrößerbar, insbesondere aufklappbar, ausgestaltet ist, dass das Auflageelement (30) in einem vergrößerten, insbesondere aufgeklappten, Zustand (34) eine in der Ausziehrichtung (31) betrachtete vergrößerte Breite (35) aufweist, die zumindest näherungsweise gleich einer in der Ausziehrichtung (31) betrachteten Breite (33) der Ablagefläche (20) im ausgezogenen Zustand (26) ist.

6. Ablageeinrichtung nach Anspruch 5,
**dadurch gekennzeichnet,**
**dass** das Auflageelement (30) vertikal betrachtet unter der Ablagefläche (20) und horizontal betrachtet zumindest teilweise neben der Ablagefläche (20) angeordnet ist und/oder dass das Auflageelement (30) im vergrößerten Zustand (34) eine Auflagefläche (37) ausbildet, an der eine Campingbettauflage (40), insbesondere ein Ende (41) der Campingbettauflage (40), abstützbar ist.

7. Ablageeinrichtung nach einem der vorhergehenden Ansprüche,
**dadurch gekennzeichnet,**
**dass** eine vorzugsweise geschlossene Platte (50) vorgesehen ist, dass die Stäbe (22) der ersten Stabanordnung (21) mit der Platte (50) verbunden sind und dass die Ablagefläche (20) teilweise an der Platte (50) ausgebildet ist.

8. Ablageeinrichtung nach Anspruch 7,
**dadurch gekennzeichnet,**
**dass** zur vertikalen Abstützung zumindest ein Stützelement (55), insbesondere eine Stützplatte (55), vorgesehen ist, an dem die Platte (50) an ihrer Stirnseite (56) zumindest mittelbar befestigt ist.

9. Ablageeinrichtung nach einem der vorhergehenden Ansprüche,
**dadurch gekennzeichnet,**
**dass** zur vertikalen Abstützung zumindest ein Stützelement (58), insbesondere eine Stützplatte (58), vorgesehen ist, an dem die Stäbe (22) der ersten Stabanordnung (21) zumindest mittelbar befestigt sind.

10. Freizeitfahrzeug (1), insbesondere Wohnmobil und/oder Campervan und/oder auf einem Hochdachkombi (4) basierenden Freizeitfahrzeug (1), mit zumindest einer Ablageeinrichtung (2) nach einem der Ansprüche 1 bis 9.

11. Freizeitfahrzeug nach Anspruch 10,
**dadurch gekennzeichnet,**
**dass** die Ablageeinrichtung (2) in einem Heckraum (18) angeordnet ist.

12. Freizeitfahrzeug nach Anspruch 10 oder 11,
**dadurch gekennzeichnet,**
**dass** eine zumindest teilweise umklappbare Rückbank vorgesehen ist, dass im eingeschobenen Zustand neben der Ablageeinrichtung ein Stauraum, insbesondere für zumindest ein Fahrrad, frei bleibt, und dass sich die Ablagefläche im ausgezogenen Zustand zumindest im Wesentlichen über einen Breite des Innenraums erstreckt.
